# EUROPEAN PATENT APPLICATION

(11) **EP 3 062 279 A1**
(43) Date of publication of application: **31.08.2016**
(21) Application number: 15382084.0
(22) Date of filing: 27.02.2015
(51) Int. Cl.: G06Q 30/02

(54) **Method and system for generation of parameters**

(71) Applicant: BBVA Data & Analytics, S.L.U., 28036 Madrid (ES)
(72) Inventor: Villatoro Segura, Daniel, E-28036 Madrid (ES); Patanè, Dario, E-28036 Madrid (ES)
(74) Representative: ABG Patentes, S.L.

(57) **Abstract**

There is provided a method for obtaining at least a behavioural pattern parameter (pᵢ), the method comprising
- applying community detection to a set of data (1), obtaining one or more heterogenic communities (2ᵢ), i=1..N, N=≥1,
- obtaining at least one behavioural pattern parameter (pᵢ), the behavioural pattern parameter (pᵢ) being at least one statistical indicator from at least one heterogenic community (2ᵢ).

## Description

### TECHNICAL FIELD OF THE INVENTION

The present invention relates to methods and systems for the generation of parameters. Particularly, the invention is focused on creating a recommendation parameters list of items which are distinctive for specific tendency patterns.

### BACKGROUND OF THE INVENTION

Recommender systems focus in the selection of an adequate item for a user, with the intention of maximizing the matching chances with said user. Classically, there are three types of filters to be used for recommendations directed to users:
Content-based collaborative filters: the items are matched with the specific user preferences based in item's properties.
Collaborative filtering: The recommended list of items is based not only in the preferences of a particular user but also in preferences of related users. For example Groh, G., & Ehmig, C. (2007, November): "Recommendations in taste related domains: collaborative filtering vs. social filtering", in Proceedings of the 2007 international ACM conference on Supporting group work (pp. 127-136). ACM, takes also a social approach when calculating references, and also includes spatial computations in order to produce references that lead to recommendations. However these solutions require the actual taste of users thus leading to require personal information which users may reject to give.
Hybrid systems: This system is a combination of content-based and collaborative filters.
Location-based systems: These systems allow users to obtain the most adequate venue with respect to their current position. The problem of finding adequate venues for users to visit is a problem already tackled by the recommender community (See for example Zheng, Y., Chen, Y., Xie, X., & Ma, W. Y. (2009, May): "GeoLife2. 0: a location-based social networking service. In Mobile Data Management: Systems, Services and Middleware, 2009." MDM'09. Tenth International Conference on (pp. 357-358)". IEEE; or Park, M. H., Hong, J. H., & Cho, S. B. (2007): "Location-based recommendation system using bayesian user's preference model in mobile devices". InUbiquitous Intelligence and Computing (pp. 1130-1139). Springer Berlin Heidelber. However, these solutions do not take into account the generation of parameters that will feed the actual recommendation algorithm, generally extracted from the user's context.

The above mentioned filters require the knowledge of user preferences so that a recommendation system needs to be authenticated leading to capture personal information, most of the time being annoying and untrustworthy for a final user.

US 20130246323 A1 shows a contextual content suggestion, associating the popularity of an item to a specific location. However, this document does not take into account other factors different than popularity, and therefore this solution does not allow distinguishing different trends: for example the most awarded movie is seen throughout the world but that would not be a custom recommendation.

WO 2014087050 A1 and US 20120143859A1 describe adaptive recommenders with respect to the user generating the request. A recommendation is created using information that is hosted in the user's device. However, this solution does not solve the problem of an efficient recommendation without the need of capturing personal information.

Therefore there is a need to provide an alternative solution for generating parameters to feed a recommendation method or algorithm without the need of storing personal information of a particular user.

### SUMMARY OF THE INVENTION

The present invention provides an alternative solution for the aforementioned problems, by a method for obtaining at least a behavioural pattern parameter according to claim 1, a computer program comprising computer program code according to claim 10, a computer program stored on a computer usable medium according to claim 11, a system according to claim 12 and an analysis system according to claim 14. Preferred embodiments of the invention are defined in dependent claims.

In a first inventive aspect, the invention provides a method for obtaining at least a behavioural pattern parameter, the method comprising
- applying community detection to a set of data obtaining one or more heterogenic communities,
- obtaining at least one behavioural pattern parameter, the behavioural pattern parameter being at least one statistical indicator from at least one heterogenic community.

Throughout this document, behavioural pattern parameter will be understood as a parameter determining the tendency of a sample group. The tendency may comprise statistics relating to geolocation, productivity, features evolving in time or popularity.

The set of data may take the form of networks, sets of nodes or vertices joined together in pairs by links or edges. Examples comprise
- collaboration networks,
- technological networks such as the Internet or the Worldwide Web,
- power grids,
- biological networks such as neural networks,
- metabolic networks and
- social networks such as acquaintance networks.

Applying community detection to a set of data or network before obtaining a behavioural parameter allows differentiating parameters depending on a community. As a difference with respect to the state of the art, the invention allows these parameters be not only obtained for a set of aggregated data but customized for every community comprised within the set of data. Community detection allows grouping nodes of a set of data into potentially overlapping heterogenic data such that each set of heterogenic data is densely connected. Communities may comprise pairs of set of heterogenic data are more likely to be connected if they are both members of the same community, and less likely to be connected if they do not share communities.

Advantageously, a method according to the invention smartly establishes behavioural parameters of a set of data being characteristic parameters and not only most common parameters as in the state of the art. In this way, non-representative data which are common to all the communities are obviated. This behavioural parameter may be used for establishing trends differences within a big set of data comprising subsets of heterogenic data which are more or less correlated.

In certain embodiments a method according to the invention further comprises, prior to applying community detection, obtaining at least one popular behavioural pattern parameter from an initial set of data.

This embodiment allows acknowledging, prior to stablishing differences, a parameter which may be similar to the whole set of data so that actions may be applied as a function of this parameter which is common.

This popular behavioural pattern parameter may be deleted from the statistical indicators, so that the smart establishment is optimum in the sense that non-representative data are eliminated before obtaining the behavioural pattern parameter; therefore computation means and resources are saved in obtaining a statistical indicator from heterogenic communities.

In certain embodiments the method further comprises selecting at least one behavioural pattern parameter out of the obtained one statistical indicators.

In certain embodiments the method further comprises sending said at least one behavioural pattern parameter to an analysis system, preferably a recommendation system.

Advantageously a behavioural pattern parameter allows an analysis system determine the behavioural tendency of a community. When applied on recommender systems, these may be used for recommending an item to a final system or user. Advantageously a parameter which is generated by a method according to the invention represents a tendency depending on a community. The community may coincide with the community a final system or user belongs to or may be a different one, if it is selected, as in the embodiment described above. This allows providing accurate items with no need of requiring particular data about the final system.

In a particular example a final film computer system needs to analyse movies for viewers who need some kind of particular entertainment. Then a set of data may comprise aggregated data about viewers. The method may obtain heterogenic communities which may differentiate viewers:
- who further enjoy doing certain sports,
- who may prefer viewing animation movies,
- who may prefer American movies, and
- who usually travel for attending important film releases.

A method according to the invention obtains at least one behavioural pattern parameter, the behavioural pattern parameter being at least one statistical indicator from every heterogenic community. The method in the above example obtains the following behavioural patterns:
- film studio: one of the communities usually watch movies from a particular film studio,
- cinema: one of the communities live close to a particular cinema,
- two descendants: the members of one of the communities coincide between them in having at least two children,
- religion: the members of one of the communities are religious.

A method according to the invention, as it is seen in the above example, allows obtaining behavioural patterns which are representative for every detected community.

In certain embodiments the at least one statistical indicator comprises at least one of a group at least comprising:
- degree centrality indicator,
- closeness centrality indicator,
- betweenness centrality indicator,
- eigenvector centrality indicator,
- katz centrality indicator and
- alpha centrality indicator.

In certain embodiments obtaining at least one behavioural pattern parameter comprises obtaining one parameter from each heterogenic community.

In certain embodiments a method according to the invention further comprises generating an analysis list based on at least one parameter.

The analysis list may be used for providing results of a statistical study. The above example is hereby used and extended for showing the advantages of a method according to the invention.

The final film computer system of the above example may decide to select cinema and two descendants as parameters for the analysis to be made. Therefore, results on the film to view per community and features can be finally obtained, the analysis being based on two of the parameters previously obtained.

Advantageously, this procedure has had no need of obtaining personal information from a viewer who would see the movie. The procedure for analysing or obtaining results for a movie has only needed some feedback, which feedback has been "cinema" and "two descendants" to provide results. Even if some of the parameters may seem to comprise personal information this is not necessarily true. The reason to select "two descendants" may comprise reasons such as obtaining a movie which does not show explicit images, for example, rather than indicating that the patient who is to see the movie has, in fact, two children. The parameter "cinema" in the above example may be decisive, to the extent that said "cinema" may show a certain movie offering discounts to clients from neighbouring areas, and therefore a viewer can benefit from it.

In certain embodiments the analysis list comprises a recommendation list. For example, the above method may be used for recommending a type of medicine suitable for a patient.

In certain embodiments a single parameter is selected. In the above example the parameter "cinema" may be the only one selected. Advantageously this reduces the computation time and resources for the analysis list to be generated.

In certain embodiments the set of aggregated data is graph structured. Advantageously graphs are widely known and allow handling data whose structure is based on the orrelations between their nodes. Besides, handling data which is graph structured allows efficiency compared to other structures of databases, by reducing exponentially the exhaustive combination exploration done by classical database systems.

In certain embodiments the analysis list is further based on location information. A method according to the invention may also have knowledge of location information on which an analysis list or recommendation list may be based. Advantageously these embodiments would obtain results which would be related to the location of a user, adding a further filter to the results; thus, the analysis list or recommendation list would be fine-tuned in these embodiments. Besides, location data allows the emergence of intrinsic connections amongst items not otherwise inferred. For example, a patient may visit a certain hospital and eventually visit a specific pharmacy; if the amount of patients performing these two separate actions reaches a certain critical mass, it will be possible to induce this co-visitation pattern amongst the two items of information or venues in this case.

In certain embodiments a method according to the invention comprises sending at least a behavioural pattern parameter, to a recommendation system. Advantageously a recommendation system may be fed with a parameter according to the present invention thus avoiding the need of storing personal information of a particular user or feeding a recommendation system with such personal information.

In a second aspect of the invention there is provided a computer program comprising computer program code which when executed by a device causes the device to carry out all the steps of a method according to the invention.

In a third embodiment of the invention there is provided a computer program stored on a computer usable medium comprising computer program code means adapted to carry out all the steps of a method according to the invention.

In a fourth aspect of the invention there is provided a system comprising means adapted to perform the steps of a method according to the invention.

In certain embodiments a system according to the invention comprises means for generating an analysis list based at least on the at least one received parameter.

In a fifth aspect of the invention there is provided an analysis system comprising
- means for receiving at least a behavioural pattern parameter obtained by a method according to the invention, and
- means for generating an analysis list based at least on the at least one received parameter.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1: This figure shows the references and steps of a method according to the invention.
- Figures 2: This figure represents a network on which a method according to the invention is performed.
- Figure 3: This figure shows the results of applying several different community detection algorithms over a same graph.
- Figure 4: This figure represents an example of steps of a method according to the invention, taking into account particular inputs feed.
- Figure 5:: This figure shows sequence of an example of a method according to the invention.

### DETAILED DESCRIPTION OF THE INVENTION

The set of examples below relate generally to a location based recommender service and, more particularly, to dynamically generating references to feed a recommendation algorithm that provides suggested venues by analysing transactional data from client's historical transactions.

Any transactional system with geo-referencing capabilities enables the information on the location of their users along their history of usage of the system. This information can reach several levels of spatial granularity depending on the system: precise GPS coordinate (in case of navigation systems), vicinity to an antenna (in case of a telecommunication system), user-entered venues (in case of social networking sites such as Foursquare or Facebook), or commercial venues, amongst many others.

In the specific case of venues, the plethora of options have opened a new line of recommender applications allowing their users to obtain a venue recommendation contextualized to user's parameters such as location, time of request, or user's past history. Examples of these types of applications are Foursquare, GoWalla, or Google Places.

With the aim to producing better recommendations, the present example recommends venues based on a network of aggregated and anonymized data made in these venues. The invention selects a venue to be used as a reference in order to build the recommendation, which recommendation may be constructed based further on the user current context (location and time of the request) and the reference.

Both location based systems and venue recommender systems may create and store a record of a user's location history as well as co-visitation patterns of each user.

User-generated location data allows the emergence of intrinsic connections amongst venues that would be not inferred otherwise. For example, users can visit a certain restaurant and eventually visit a specific store; if the amount of users performing these two separate actions reaches a certain critical mass, it will be possible to induce this co-visitation pattern amongst the two venues.

This method is able to generate a list of references venues given a precise location and a target category; moreover it will ensure the maximum coverage in terms of diversification due to the analysis of emergent communities observed in the transactional data.

This invention proposes a method and system for generating a list of references to be chosen by a user, and the selected reference feeds the recommendation algorithm that generates results based on that reference.

This invention profit from the co-visitation graph and certain graph operations combined with spatial mining techniques, to produce the most adequate set of references with respect to a spatial area and a commercial category. The resulting references cover different commercial communities as well ensuring representative results and popularity variety.

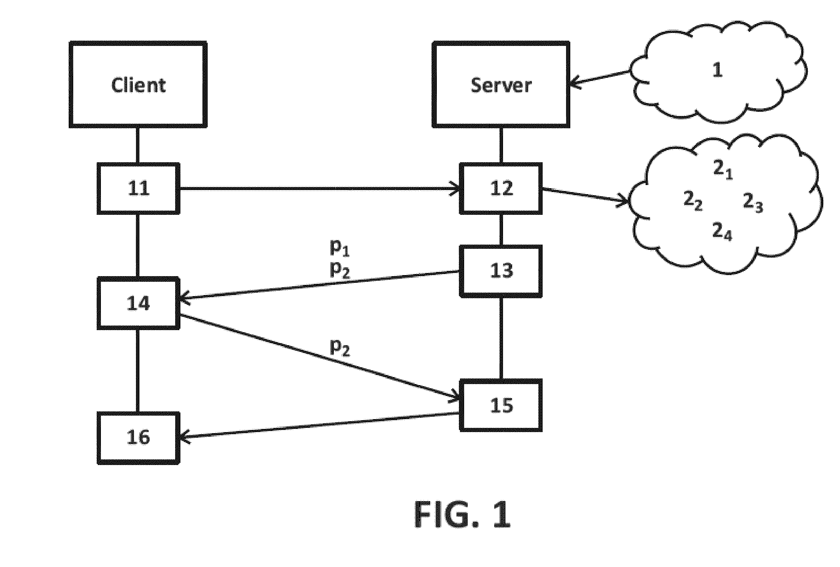

In client-server architecture, the steps of an example according to the invention are shown in figure1 where the interaction of a user with a server is represented, and where a method according to the invention may be implemented. In the subsequent paragraphs and embodiments a server may be instanced in a single machine or several machines sharing connections and information. Therefore the examples herein described are not limited to a single server.

Figure 1 shows the following references and steps:
11: Client selects type of venues or category for which he needs recommendation.
12: Server applies community detection to a set of data (1), obtaining one or more heterogenic communities (2ᵢ), i=1..N, N=≥1.
13: Server obtains at least one behavioural pattern parameter (p₁, p₂), the behavioural pattern parameter (pᵢ) being at least one statistical indicator from at least one heterogenic community (2ᵢ).
14: Client selects p₂.
15: Server generates a recommendation list of venues.
16. Client decides to go to one of these recommended venues.

The present example uses a first category ("Dining", "Shopping", or "Have a drink" are some examples) and optionally a geographical location. The list of references needs to be generated and provided to the user. At this specific stage is where the invention applies. After the user receives and selects a reference or parameter (pᵢ), a recommendation list is built for the user to select.

In computers, a graph is an abstract data type that is meant to implement the graph and directed graph concepts from mathematics. A graph data structure consists of a finite set of nodes or vertices, together with a set of ordered pairs of these nodes. As in mathematics, an edge is said to point or go from one node to another.

A graph data structure may also associate to each edge some edge value, such as a symbolic label or a numeric attribute (cost, capacity, length, etc.). Aggregated data may be stored and structured in computational graphs. Figures 1a and 1b show the results of applying different community detection algorithms over a same graph. Said results of community detection allow the emergence of communities of items related in terms of shared users. In a particular example further information about the items may be available, advantageously allowing to perform more accurate calculations, such as a merchant category describing the activity performed in a store to be recommended, and coordinates representing the store's geolocation.

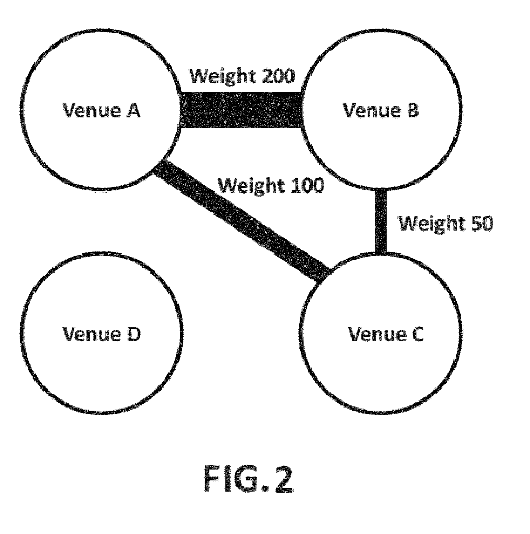

Figure 2 represents a network; 4 nodes in the network represent the venues for which there is a proof of attendance of any of the users (such as check-ins, phone location records, or credit cards transactions). Edges in the network represent the amount of users that have visited both venues, resulting therefore in a co-visitation network, not being limited to the example in figure 2. A co-visitation graph may include other measures based on the amount of shared clients and each node's total or partial clients, such as a Tanimoto-based distance. A different amount of users shared by two venues may be different.

Said 4 nodes represent venues A, B, C, and D:
- Venue A shares 200 clients with Venue B, as well as 100 with Venue C;
- Venue B and C share 50 clients amongst them;

The thickness of the edges is represented proportionally to their weight only as a visualization help. In some cases, as it happens with Venue D, some venues may not share clients with other venues, or might be part of a complete different graph component.

With respect to the nodes, a node degree is the number of connections it shares with other nodes, which varies from 0, when a node has no connections with others, up to any positive number representing the connections with other nodes.

Centrality indicators identify the most important vertices within a graph. Applications include identifying the most influential person(s) in a social network, key infrastructure nodes in the Internet or urban networks, and super spreaders of disease. Centrality concepts were first developed in social network analysis, and many of the terms used to measure centrality reflect their sociological origin.

Betweenness centrality indicator, for example, quantifies the number of times a node acts as a bridge along the shortest path between two other nodes.

Other centrality indicators may be:
- closeness centrality indicator
- eigenvector centrality indicator,
- katz centrality indicator and
- alpha centrality indicator.

With respect to the graph in figure 2, the topological structure of the nodes and their connections do not allow detecting sub-communities within the graph. Advantageously community detection allows detecting said sub-communities.

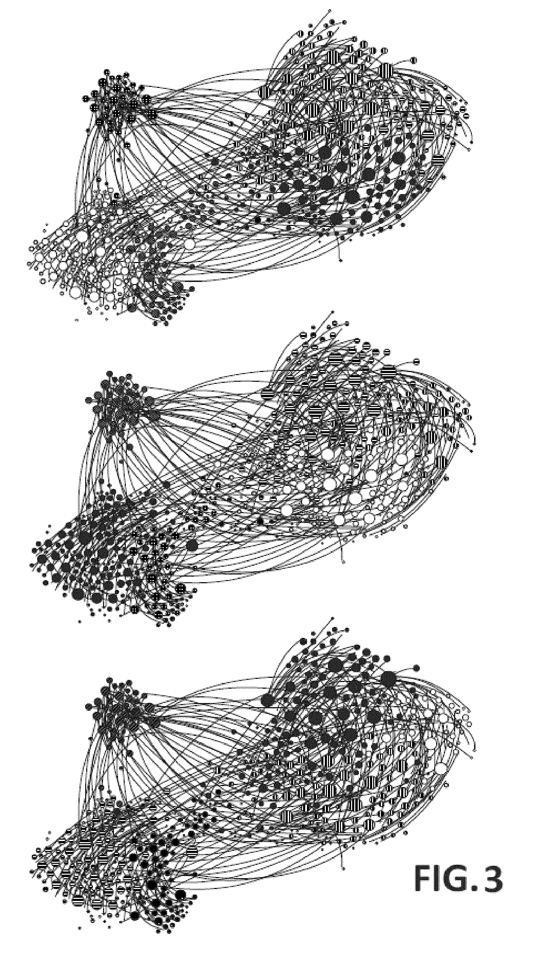

Figure 3 shows the results of applying several different community detection algorithms over a same graph. The results of community detection algorithm allow the emergence of communities of venues that are related in terms of shared clients. As ir can be seen, different sub-communities may be obtained by applying different criteria of community detection.

Some other information about the venues may be available in order to perform more accurate calculations, such as the Merchant Category and Subcategory (which describes the activity performed in that venue at two different levels of aggregation), and the coordinates that represent the venue's spatial location.

Categories may be included in the following list:
- Auto
- Bars and restaurants
- Banking
- Books and press
- Fashion
- Food
- Health
- Home
- Accomodation
- Hypermarkets
- Leisure
- Other services
- Real state
- Sports and toys
- Technology
- Transport
- Travel
- Wellness and beauty

In order to produce the set of behavioural pattern parameter (pᵢ) or reference venues in this example for a user, the invention implements an algorithm that profits from the graphs, communities, sub-communities, and some contextual information.

The variables determining a user's context may be user's location, and a selected category and co-visitation graph. The user's location can be expressed in several ways, preferably GPS coordinates, although other alternatives may be generated such as venue location (e.g. Alice's Bar) or proximity to a system's known element (e.g. Tower 1061). The selected category may be one of existing in the venue's knowledge base, or a known mapping from other predefined categories to the existing ones. The co-visitation graph may have betweenness values precomputed for each node.

The server may also request:
- the number of behavioural pattern parameter (pᵢ) or references to be generated per client and request,
- the search radius in which the final recommendation has to be contained from the user's geo-position, The server can also decide the radius from user's location in which the recommendation will be built, and therefore, for which the references need to be constructed. Optionally, a policy for radius management may be included to dynamically adapt the radius value depending of the user location and the venues density in that area. Such policy would generate larger radius for locations with lower venues density , for example places where there are not a considerable number of venues (allowing to find enough venues to recommend), and smaller radius for locations with larger venues density, for example areas where there are a large variety and number of venues (restricting the recommender search space);
- the distribution of popularity level per requests. Popularity level may result from a normalized in a normalized range [0, 1] degree of a venue in the co-visitation graph. For any specific venue, the closer its venue's popularity is to 1, the larger is the amount of venues its shares clients with this specific one; and on the contrary, the closer the venue's popularity is to zero, the lower amount of venues share clients with this one. Therefore, the popularity level will be specified as a range that determines the minimum and maximum popularity values, specified in the normalized range [0, 1]. Additionally the invention may allow the server to adapt the popularity level distribution according to any user and context, becoming configurable and adaptable. Advantageously, the invention may be able to learn user preferences from usage. A user model may be generated by a user profiling module which may allow the adaptation of the popularity level distributions. Before any user profiling is done with respect to specific popularity levels distribution configuration, the system manager can decide the default popularity level distribution, as well as the total number of references to be shown to each user.

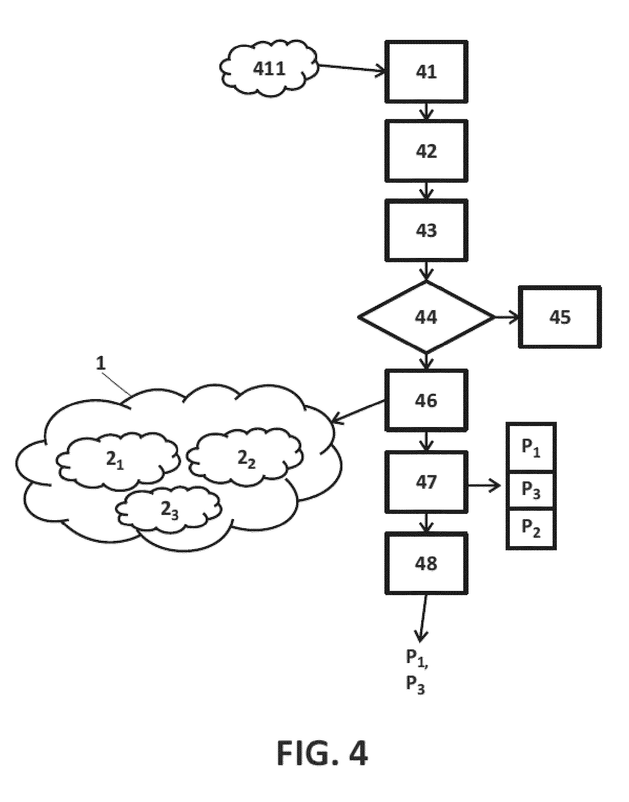

Figure 4 represents an example of steps of a method according to the invention, taking into account all the inputs feed explained above.

The server receives a request from a user, from a specific location, a desired category, and number of requested references. The server obtains (41) an initial set of data (411) with all the venues located within the specified range and that belong to any of the selected categories by the user. These venues are named target venues, as they are the potential venues that will be ranked by the recommendation algorithm.

The co-visitation graph is filtered (42) by a popularity level selected by a user, obtaining all the venues whose popularity are within the popularity range specified. This is done by observing the normalized degree of each node, and filtering out those outside the range specified within the popularity range.

The graph neighbours at distance 1 (only one hop away in the co-visitation graph) is calculated (43) for all the target venues obtained in 41, so that the rest are filtered out. A new set of venues is called potential references.

The server checks the number of potential references available (44). If this number is lower than a requested references specified by the system manager, the server returns (45) an radius error, as it needs a larger radius to obtain the requested amount. Otherwise, if there is a sufficient amount of potential references, the algorithm continues by bucketizing or applying community detection (46) to venues. Once buckets or communities (2₁, 2₂, 2₃) are created, the nodes betweenness are normalized in each of the buckets to values in the range [0,1].

The venues in different buckets are merged together (47) and ordered by their normalized betweenness.

Finally the server returns (48) the number of requested references which the user has requested in the request, ensuring the maximum coverage in terms of communities due to the application of the community detection algorithm, and obtaining the most representative venue for each community, due to the betweenness ordering.

A method according to the invention may be implemented in a computer server features such as connection to the internet with communicating capabilities through APIs with the rest of the system and the clients devices.

The invention server may have access to the following databases:
- Venues database: It may contain all the information about the individual venues, containing name, id, street address, GPS coordinates, location, business category (and eventually other levels of subcategorization), and other useful metainformation such as pictures or opening hours. This database may be a regular SQL database, such as MySQL or Postgres.
- Visitation database: This database may contain information about users, the locations visited by them, and the visitation metainformation such as timestamp. Even though it is not necessary to have the real identities of user, identities may not remain constant (This database may be a regular SQL database, such as MySQL or Postgres.
- Users database: The application's users information may be stored here in order to apply the user profiling module and eventually use different popularity distributions on each user. This database may be a regular SQL database, such as MySQL or Postgres.
- Covisitation Graph Database: From the venues database and the visitation database, the covisitation graph database may be generated with the frequency established by the system's manager (e.g. every week). This graph may be stored in a graph database similar to TITAN, NEO4J, or SPARKSEE.
- System Configuration Database: This database may store the configuration parameters necessary for the system correct performance, such as the amount of references, the radius, or the references' popularity distribution.

In the state of the art there are neither systems generating references or behavioral pattern parameters to feed a recommendation method, nor systems that profit co-visitation graphs and spatial mining to produce recommendations.

These databases may store all the necessary information from the system to perform its task. The rest of information is received from the user. The user's location and the selected category may be sent to the server using an API with a Post method. The actual request may be performed with a GET method from the system server.

The server may run the defined method. In an example the method may be programmed in Python which allows basic information handling and computations that may be supported with the library igraph (supporting graph operations such as betweenness) and the library shapely (supporting spatial operations like elements within a radius from a point, or spatial distances).

The resulting parameters or the calculated references may be sent back to the users device via Push.

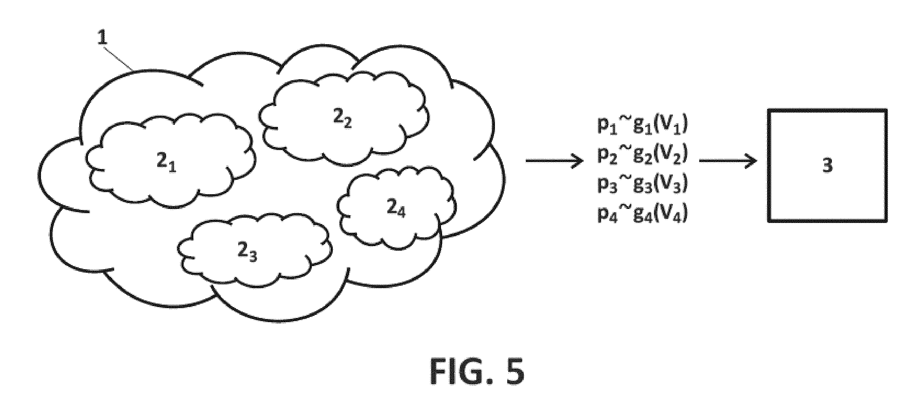

Figure 5 shows the sequence of an example of a method according to the invention wherein detection communities (2₁, 2₂, 2₃, 2₄) is performed on a set of data (1 ). Behavioural pattern parameters (p₁, p₂, p₃, p₄), are calculated or obtained as the betweenness centrality indicator (g₁(v₁), g₂(v₂), g₃(v₃), g₄(v₄)) of each community and those parameters are sent to a recommendation system (3) for generating a non-represented recommendation list.

## Claims

1. A method for obtaining at least a behavioural pattern parameter (pᵢ), the method comprising
- applying community detection to a set of data (1), obtaining one or more heterogenic communities (2ᵢ), i=1..N, N=≥1,
- obtaining at least one behavioural pattern parameter (pᵢ), the behavioural pattern parameter (pᵢ) being at least one statistical indicator from at least one heterogenic community (2ᵢ).

2. A method according to claim 1 further comprising, prior to applying community detection,
- obtaining at least one popular behavioural pattern parameter (pᵢ) from an initial set of data (411), and
- deleting at least one popular behavioural pattern parameter (pᵢ) from the initial set of data (411) obtaining the set of data (1).

3. A method according to claim any of the previous claims further comprising selecting at least one behavioural pattern parameter (pⱼ) out of the obtained one statistical indicators, j=1..N, N=≥1.

4. A method according to any of the above claims **characterized in that** the set of aggregated data is graph structured.

5. A method according to any of the above claims **characterized in that** obtaining at least one behavioural pattern parameter (pᵢ), comprises obtaining one of the parameters from each heterogenic community (2ᵢ), i=1..N, N=≥1.

6. A method according to claim any of the previous claims further comprising sending said at least one behavioural pattern parameter (pⱼ) to an analysis system (3), preferably a recommendation system (3).

7. A method according to any of the above claims further comprising generating an analysis list based on at least one behavioural pattern parameter (pᵢ).

8. A method according to claim 7 **characterized in that** the analysis list is further based on a location information.

9. A method according to claims 7 or 8 **characterized in that** the analysis list comprises a recommendation list.

10. A computer program comprising computer program code which when executed by a device causes the device to carry out all the method steps of any of the claims 1 to 9.

11. A computer program stored on a computer usable medium comprising computer program code means adapted to perform all the method steps of any of the claims 1 to 9.

12. A system (3) comprising means adapted to perform the steps of a method according to any of claims 1 to 9.

13. A system according to claim 12 further comprising means for generating an analysis list based at least on the at least one received parameter (pᵢ).

14. An analysis system (3) comprising
- means for receiving at least a behavioural pattern parameter (pᵢ) obtained by a method according to any of claims 1 to 5, and
- means for generating an analysis list based at least on the at least one received parameter (pᵢ).
